# EUROPEAN PATENT APPLICATION

(11) **EP 4 475 213 A1**
(43) Date of publication of application: **11.12.2024**
(21) Application number: 24172377.4
(22) Date of filing: 25.04.2024
(51) Int. Cl.: H01M 4/133, H01M 4/134, H01M 4/1393, H01M 4/1395, H01M 4/36, H01M 4/38, H01M 4/587, H01M 10/0525

(54) **SECONDARY BATTERY**

(30) Priority: 11.05.2023 JP 2023078235
(71) Applicant: Prime Planet Energy & Solutions, Inc., Chuo-ku Tokyo 103-0022 (JP)
(72) Inventor: KANG, Surim, Tokyo, 103-0022 (JP)
(74) Representative: Kuhnen & Wacker Patent- und Rechtsanwaltsbüro PartG mbB

(57) **Abstract**

A secondary battery (100) disclosed herein includes an electrode body (20) including a positive electrode (50) and a negative electrode (60). The negative electrode (60) includes a negative electrode active material layer (64). The negative electrode active material layer (64) includes graphite particles (66) and Si-containing particles (68). The Si-containing particle (68) is a complex of Si and C, and Si is doped with an element M. The element M is at least one kind of element among elements belonging to Group 15 and Group 16 in the periodic table. The doping amount of the element M in the Si-containing particle (68) is 0.1 at% or more and 5 at% or less. The weight ratio between the graphite particles (66) and the Si-containing particles (68) is 9:1 to 4:6.

## Description

### BACKGROUND OF THE DISCLOSURE

### 1. Field

The present disclosure relates to a secondary battery.

### 2. Background

Secondary batteries such as lithium ion secondary batteries have been suitably used for portable electrical power sources for personal computers, mobile terminals, and the like, electrical power sources for driving vehicles such as a battery electric vehicle (BEV), a hybrid electric vehicle (HEV), and a plug-in hybrid electric vehicle (PHEV), and the like. A negative electrode used for such a secondary battery normally has a structure in which a negative electrode active material layer including a negative electrode active material is disposed on a negative electrode current collector.

In recent years, using a Si-based material as a negative electrode active material has been examined for the purpose of increasing the capacity of a secondary battery (for example, Japanese Translation of PCT International Application Publication No. 2022-507948 and Japanese Patent Application Publication No. 2016-152213). Japanese Translation of PCT International Application Publication No. 2022-507948 discloses a sulfur-doped silicon negative electrode material that has an internal pore channel having an average width of 500 nm to 3 µm, and has an average diameter of 1 µm to 5 µm. Moreover, Japanese Patent Application Publication No. 2016-152213 discloses a negative electrode active material particle containing silicon, oxygen, and boron, in which the concentrations of oxygen and boron are inclined.

### SUMMARY

In a negative electrode with a high Si content, an input-output characteristic may decrease due to resistance increase or Li precipitation may occur, for example. As disclosed in Japanese Translation of PCT International Application Publication No. 2022-507948, when only doped silicon is used as the negative electrode active material, the resistance is low and the input-output characteristic of the secondary battery is high; however, expansion and shrinkage at charging and discharging tend to be large. Accordingly, a conduction path may be disconnected or the capacity may decrease due to the increase of side reaction, for example.

The present disclosure has been made in view of the above circumstances and an object of the present disclosure is to provide a secondary battery including a negative electrode including a Si-based material and graphite particles as a negative electrode active material, in which an input-output characteristic and a cycle characteristic are both achieved suitably.

A secondary battery disclosed herein is a secondary battery including an electrode body including a positive electrode and a negative electrode, and the negative electrode includes a negative electrode current collector and a negative electrode active material layer disposed on the negative electrode current collector. The negative electrode active material layer includes graphite particles and Si-containing particles as a negative electrode active material. The Si-containing particle is a complex of Si and C, and Si of the Si-containing particle is doped with an element M. The element M is at least one kind of element among elements belonging to Group 15 and Group 16 in the periodic table. The doping amount of the element M in the Si-containing particle is 0.1 at% or more and 5 at% or less. A weight ratio between the graphite particles and the Si-containing particles is 9:1 to 4:6.

With this structure, the Si-containing particle containing Si and C is doped with the element M, so that the expansion and shrinkage of Si due to charging and discharging can be suppressed suitably while the input-output characteristic is improved. Additionally, by including the Si-containing particles and the graphite particles at the aforementioned weight ratio, the expansion and shrinkage of the entire negative electrode active material can be suppressed suitably. Accordingly, the secondary battery in which both the input-output characteristic and the cycle characteristic are achieved can be realized.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a diagram schematically illustrating an internal structure of a secondary battery according to one embodiment;
FIG. 2 is a diagram schematically illustrating a structure of an electrode body according to one embodiment; and
FIG. 3 is a diagram schematically illustrating a negative electrode according to one embodiment.

### DETAILED DESCRIPTION OF THE PREFERRED EMBODIMENTS

Hereinafter, embodiments of the art disclosed herein will be described with reference to the drawings. Matters that are other than matters particularly mentioned in the present specification and that are necessary for the implementation of the art disclosed herein (for example, the general configuration and manufacturing process and the like of a secondary battery that do not characterize the art disclosed herein) can be grasped as design matters of those skilled in the art based on the prior art in the relevant field. The art disclosed herein can be implemented on the basis of the disclosure of the present specification and common technical knowledge in the relevant field. Note that each drawing is illustrated schematically and the size relation (length, width, thickness, and the like) does not necessarily reflect the actual size relation. In addition, in the drawings to be described below, the members and parts with the same operation are denoted by the same reference sign and the overlapping description may be omitted or simplified. Moreover, in the present specification, the notation "A to B" (A and B are arbitrary numerals) for a range signifies a value more than or equal to A and less than or equal to B, and is meant to encompass also the meaning of being "more than A (over A)" and "less than B (under B)".

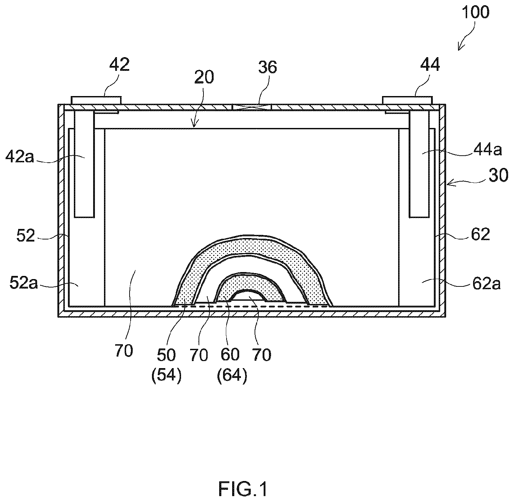

FIG. 1 is a diagram schematically illustrating an internal structure of a secondary battery 100 according to one embodiment. As illustrated in FIG. 1, the secondary battery 100 includes an electrode body 20 that includes a positive electrode 50 and a negative electrode 60, a nonaqueous electrolyte (not illustrated), and a battery case 30 that accommodates the electrode body 20 and the nonaqueous electrolyte. The secondary battery 100 illustrated in FIG. 1 is a lithium ion secondary battery here. The negative electrode 60 disclosed herein is preferably used as a negative electrode for a lithium ion secondary battery.

The battery case 30 includes a positive electrode terminal 42 and a negative electrode terminal 44 for external connection, and a thin safety valve 36 that is set to, when the internal pressure of the battery case 30 has risen to or above a predetermined level, release the internal pressure. In addition, the battery case 30 includes an injection port (not illustrated) for injecting a nonaqueous electrolyte solution. The positive electrode terminal 42 is electrically connected to a positive electrode current collection plate 42a. The negative electrode terminal 44 is electrically connected to a negative electrode current collection plate 44a. As a material of the battery case 30, a metal material with small weight and high thermal conductivity, such as aluminum, is used, for example.

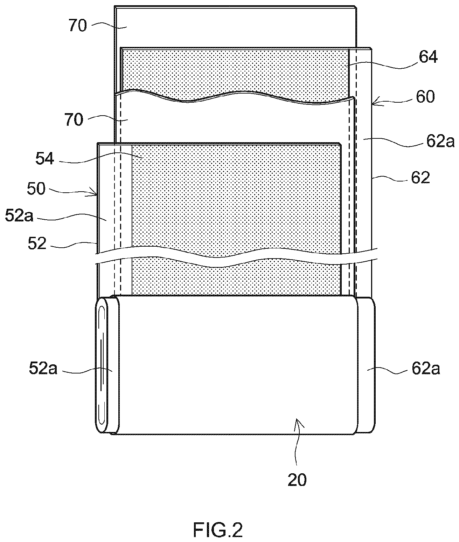

FIG. 2 is a diagram schematically illustrating a structure of the electrode body 20. Here, the electrode body 20 is a wound electrode body with a flat shape. As illustrated in FIG. 2, the electrode body 20 is in a form in which the positive electrode 50 in a rectangular sheet shape (hereinafter also referred to as "positive electrode sheet 50") and the negative electrode 60 in a rectangular sheet shape (hereinafter also referred to as "negative electrode sheet 60") are overlapped on each other through two rectangular separators 70 and wound in a longitudinal direction. The positive electrode sheet 50 has a structure in which a positive electrode active material layer 54 is formed along the longitudinal direction on one surface or both surfaces (here, both surfaces) of a positive electrode current collector 52 in a rectangular shape. The negative electrode sheet 60 has a structure in which a negative electrode active material layer 64 is formed along the longitudinal direction on one surface or both surfaces (here, both surfaces) of a negative electrode current collector 62 in a rectangular shape. As illustrated in FIG. 1 and FIG. 2, a positive electrode current collector exposed part 52a (that is, a part where the positive electrode active material layer 54 is not formed and the positive electrode current collector 52 is exposed) and a negative electrode current collector exposed part 62a (that is, a part where the negative electrode active material layer 64 is not formed and the negative electrode current collector 62 is exposed) are formed so as to protrude outward from opposite ends of the electrode body 20 in a winding axis direction (that is, a sheet width direction that is orthogonal to the longitudinal direction). To the positive electrode current collector exposed part 52a and the negative electrode current collector exposed part 62a, the positive electrode current collection plate 42a and the negative electrode current collection plate 44a are bonded, respectively.

As the positive electrode current collector 52 that forms the positive electrode sheet 50, a known positive electrode current collector that is used for a lithium ion secondary battery can be used without particular limitations. For example, a sheet or a foil made of metal with excellent conductivity (for example, aluminum, nickel, titanium, stainless steel, or the like) is given. The positive electrode current collector 52 is preferably an aluminum foil. The size of the positive electrode current collector 52 is not limited in particular and may be determined as appropriate in accordance with battery design. In the case of using an aluminum foil as the positive electrode current collector 52, the thickness thereof is not limited in particular, and is for example 5 µm or more and 35 µm or less and preferably 7 µm or more and 20 µm less.

The positive electrode active material layer 54 contains a positive electrode active material. As the positive electrode active material, a positive electrode active material with a known composition that is used for a lithium ion secondary battery may be used. Specifically, for example, a lithium complex oxide, a lithium transition metal phosphate compound (for example, lithium iron phosphate (LiFePO₄) or manganese lithium phosphate (LiMnPO₄)), or the like can be used as the positive electrode active material. A crystal structure of the positive electrode active material is not limited in particular and may be a layered structure, a spinel structure, an olivin structure, or the like.

As the lithium complex oxide, a lithium transition metal complex oxide containing at least one kind selected from Ni, Co, and Mn as a transition metal element is preferable. Specific examples thereof include lithium nickel complex oxides, lithium cobalt complex oxides, lithium manganese complex oxides, lithium nickel manganese complex oxides, lithium nickel cobalt manganese complex oxides, lithium nickel cobalt aluminum complex oxides, lithium iron nickel manganese complex oxides, and the like. One kind of these positive electrode active materials may be used alone or two or more kinds thereof may be used in combination. In particular, as the positive electrode active material, the lithium nickel cobalt manganese complex oxide can be used preferably.

Note that, in the present specification, the term "lithium nickel cobalt manganese complex oxide" encompasses oxides containing Li, Ni, Co, Mn, and O as constituent elements and moreover oxides containing one kind or two or more kinds of additive elements other than those above. Examples of such additive elements include transition metal elements, typical metal elements, and the like including Mg, Ca, Al, Ti, V, Cr, Y, Zr, Nb, Mo, Hf, Ta, W, Na, Fe, Zn, Sn, and the like. The additive element may be a metalloid element such as B, C, Si, or P or a non-metallic element such as S, F, Cl, Br, or I. This similarly applies to the lithium nickel complex oxides, the lithium cobalt complex oxides, the lithium manganese complex oxides, the lithium nickel manganese complex oxides, the lithium nickel cobalt aluminum complex oxides, the lithium iron nickel manganese complex oxides, and the like described above.

The positive electrode active material layer 54 may include a component other than the positive electrode active material, for example a conductive material, a binder, or the like. Preferred examples of the conductive material include carbon black such as acetylene black (AB), carbon fiber such as vapor growth carbon fiber (VGCF) or carbon nanotube (CNT), and other carbon materials (such as graphite). As the binder, for example, polyvinylidene fluoride (PVdF) or the like can be used.

Although not limited in particular, the content of the positive electrode active material in the positive electrode active material layer (that is, the content of the positive electrode active material relative to the total weight of the positive electrode active material layer 54) is, for example, preferably 70 wt% or more and more preferably 80 wt% or more and 99 wt% or less, and may be 85 wt% or more and 98 wt% or less. The content of the conductive material in the positive electrode active material layer is not limited in particular, and is preferably 0.5 wt% or more and 5 wt% or less and more preferably 0.7 wt% or more and 5 wt% or less. The content of the binder in the positive electrode active material layer is not limited in particular, and is preferably 0.5 wt% or more and 5 wt% or less and more preferably 0.7 wt% or more and 5 wt% or less.

The thickness of the positive electrode active material layer 54 on one surface is not limited in particular, and is for example 20 µm or more and preferably 50 µm or more. On the other hand, the thickness of the positive electrode active material layer 54 on one surface is for example 300 µm or less and preferably 200 µm or less.

As the separator 70, various kinds of microporous sheets that are similar to the conventional ones can be used, and examples thereof include microporous resin sheets made of resin such as polyethylene (PE) or polypropylene (PP). Such microporous resin sheets may have a single-layer structure or a multilayer structure of two or more layers (for example, a three-layer structure in which a PP layer is stacked on each surface of a PE layer). The separator 70 may have a heat resistance layer (HRL).

The nonaqueous electrolyte may be similar to the conventional one, and for example, a nonaqueous electrolyte solution in which an organic solvent (nonaqueous solvent) contains a supporting salt can be used. As the nonaqueous solvent, a non-protonic solvent such as carbonates, esters, or ethers can be used. In particular, carbonates such as ethylene carbonate (EC), diethyl carbonate (DEC), dimethyl carbonate (DMC), or ethyl methyl carbonate (EMC) can be suitably employed. Alternatively, a fluorine-based solvent such as a fluorinated carbonate, for example, monofluoroethylene carbonate (MFEC), difluoroethylene carbonate (DFEC), monofluoromethyldifluoromethyl carbonate (F-DMC), or trifluorodimethyl carbonate (TFDMC) can be preferably used. One kind of such nonaqueous solvents can be used alone or two or more kinds thereof can be used in combination. As the supporting salt, for example, a lithium salt such as LiPF₆, LiBF₄, or LiClO₄ can be suitably used. The concentration of the supporting salt is not limited in particular, and is preferably about 0.7 mol/L or more and 1.3 mol/L or less. The nonaqueous electrolyte may include a component other than the aforementioned nonaqueous solvent and supporting salt as far as an effect in the present disclosure is not impaired significantly, and may include, for example, various kinds of additives such as a gas generator, a film forming agent, a dispersant, and a thickener.

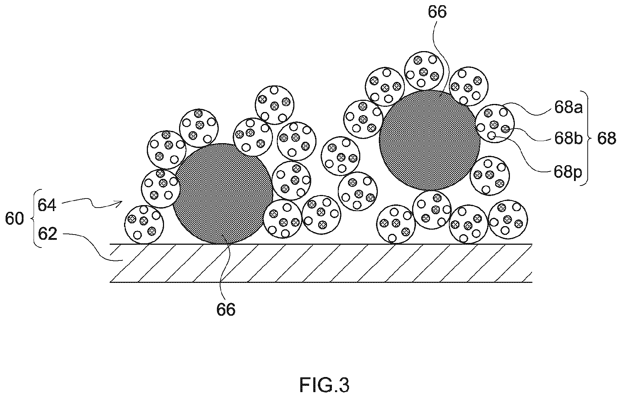

The negative electrode 60 of the secondary battery disclosed herein will be described below. FIG. 3 is a diagram schematically illustrating the negative electrode 60 of the secondary battery 100 disclosed herein. As illustrated in FIG. 3, the negative electrode 60 includes the negative electrode current collector 62 and the negative electrode active material layer 64 disposed on the negative electrode current collector 62. The negative electrode current collector 62 may be a conventionally known one, without particular limitations. For example, a sheet or foil-shaped body made of metal such as copper, nickel, titanium, or stainless steel is given. In the case of using a copper foil as the negative electrode current collector 62, the average thickness thereof is not limited in particular and is, for example, 5 µm or more and 30 µm or less, preferably 5 µm or more and 20 µm or less, and more preferably 5 µm or more and 15 µm or less.

The negative electrode active material layer 64 includes at least a negative electrode active material. The negative electrode active material layer 64 includes graphite particles 66 and Si-containing particles 68 as the negative electrode active material. Such Si-containing particles 68 are doped with at least one kind of element among Group 15 and Group 16 in the periodic table. In the negative electrode active material layer 64 disclosed herein, the weight ratio between the graphite particles 66 and the Si-containing particles 68 is 9:1 to 4:6. With this structure, the secondary battery 100 in which both the cycle characteristic and the input-output characteristic are achieved is realized. In this specification, the term "dope" means adding the element in Group 15 and Group 16 to the Si-containing particle as a small amount of additives that are different from the Si-containing particle.

Although there is no intention to limit the art disclosed herein, the reason why such an effect is obtained is presumed as follows. Since Si is doped with an element M, insulator to metal transition occurs and the conductivity improves. Thus, the input-output characteristic of the secondary battery can be improved. Meanwhile, the expansion and shrinkage of the negative electrode due to the charging and discharging tend to increase and disconnection of a conductive path and side reaction increase, which may result in the decrease in cycle characteristic (for example, capacity retention) of the secondary battery. In view of this, in the secondary battery 100 disclosed herein, Si doped with the element M is used for the Si-containing particle 68 containing Si and C, so that the expansion and shrinkage of Si due to the charging and discharging can be suppressed. In the secondary battery 100 disclosed herein, the expansion and shrinkage of the entire negative electrode can be suppressed more suitably when the graphite particles 66 and the Si-containing particles 68 are contained at a predetermined proportion. With such a structure, the secondary battery 100 in which both the input-output characteristic and the cycle characteristic are achieved can be realized.

As the graphite particle 66, for example, artificial graphite, natural graphite, or the like is used. The graphite particle 66 may have a covering layer of amorphous carbon on a surface thereof. Although not limited in particular, the graphite particle 66 preferably has an approximately spherical shape. Note that in this specification, the term "approximately spherical shape" encompasses a spherical shape, a rugby ball shape, and the like and for example, refers to a shape with an average aspect ratio (in the minimum rectangle circumscribed to the particle, the ratio of the length in a major axis direction to the length in a minor axis direction) of 1 to 2 (preferably 1 to 1.5) for example.

The average particle diameter (D₅₀ particle diameter) of the graphite particles 66 is not limited in particular and is, for example, preferably 5 µm or more and 30 µm or less and more preferably 10 µm or more and 25 µm or less. Within this range, the expansion and shrinkage of the entire negative electrode are suppressed suitably. In this specification, the term "average particle diameter of graphite particles" means the particle diameter (D₅₀ particle diameter) corresponding to the cumulative 50% from the microparticle side in a particle size distribution based on the volume measured in accordance with particle size distribution measurement based on a laser diffraction/scattering method.

The Si-containing particle 68 is not limited in particular as long as the Si-containing particle 68 contains Si and C. The Si-containing particle 68 may contain a component other than Si and C, as long as Si and C are contained. As the Si-containing particle 68, a Si-C complex is preferably employed. The Si-C complex can be formed by, for example, a carbon material (such as graphite or a porous carbon material) carrying a Si metal, a Si oxide, or the like. The Si-containing particle 68 preferably has a structure including, for example, a porous carbon material 68a containing pores 68p, and Si nanoparticles 68b disposed in the pores 68p of the porous carbon material 68a as illustrated in FIG. 3.

Although not limited in particular, the Si content in the Si-containing particles 68 is preferably 30 wt% or more, more preferably 40 wt% or more, and still more preferably 50 wt% or more when the total weight of the Si-containing particles 68 is 100 wt%. Thus, the secondary battery 100 can have higher capacity. In addition, doping with the element M exerts a resistance reduction effect more suitably. The upper limit of the Si content in the Si-containing particles 68 is not limited in particular, and is preferably 75 wt% or less and may be 70 wt% or less. Thus, the input-output characteristic and the cycle characteristic are both achieved suitably. Note that the Si content in the Si-containing particles can be grasped using an inductively coupled plasma optical emission spectroscopy (ICP-OES) apparatus.

The average particle diameter (D₅₀ particle diameter) of the Si-containing particles 68 is not limited in particular, and is preferably 0.5 µm or more and 20 µm or less and more preferably 1 µm or more and 15 µm or less, for example. In this specification, the term "average particle diameter of Si-containing particles" means the particle diameter (D₅₀ particle diameter) corresponding to the cumulative 50% from the microparticle side in a particle size distribution based on the volume measured in accordance with particle size distribution measurement based on a laser diffraction/scattering method.

The Si-containing particle 68 preferably includes the plurality of pores (spaces) 68p internally. By the Si-containing particle 68 having such pores 68p, the expansion and shrinkage due to the charging and discharging are suppressed suitably. The Si-containing particle 68 preferably includes the plurality of pores 68p with relatively small average pore diameter, without particular limitations. When the pore 68p is relatively small, the pore 68p tends to remain even after being pressed at the manufacture of the negative electrode 60. Thus, the expansion and shrinkage of the Si-containing particle 68 due to the charging and discharging can be relieved more suitably and the cycle characteristic can be improved further.

The porosity of the Si-containing particle 68 is preferably 5 vol% or more, for example. The upper limit of the porosity is not limited in particular, and may be 60 vol% or less, for example. The "porosity" can be calculated based on the expression: porosity (%) = (1 - bulk density of Si-containing particle/true density of Si-containing particle) × 100.

The oxygen content in the Si-containing particle 68 is not limited in particular, and may be 7 wt% or less, for example, when the entire Si-containing particle is 100 wt%. The oxygen content described above can be measured using an oxygen analysis apparatus.

The Si nanoparticle 68b in the Si-containing particle 68 is a particle containing nanosize (that is, less than 1 µm) Si. The Si nanoparticle 68b can exist in the pore 68p of the porous carbon material 68a. By the Si nanoparticle 68b existing in the pore 68p of the porous carbon material 68a, the expansion and shrinkage of the Si nanoparticle 68b can be suppressed and the expansion and shrinkage of the Si-containing particle itself can also be suppressed suitably. Thus, the capacity can be increased and additionally, the cycle characteristic can be improved.

The size of the Si nanoparticle 68b is not limited in particular, and is preferably 100 nm or less and more preferably 50 nm or less. Thus, the amount of expansion and shrinkage at the charging and discharging per Si nanoparticle 68b can be reduced and crack does not occur easily even after repeated expansion and shrinkage. The average particle diameter of the Si nanoparticles 68b is not limited in particular, and can be, for example, 5 nm or more. In this specification, the average particle diameter of the Si nanoparticles can be obtained as below. First, the negative electrode active material layer is subjected to a focused ion beam (FIB) process to manufacture a sample for observation with a scanning transmission electron microscope (STEM). This sample is subjected to an elemental analysis with EDX element mapping, and then a bright field (BF) image and a high-angle annular dark field (HAADF) image are acquired. Based on the contrast and shape obtained by the BF image and the HAADF image, the diameter of the Si nanoparticle can be obtained. The arithmetic mean of the diameters of at least ten Si nanoparticles is defined as the average particle diameter of the Si nanoparticles here.

As described above, the Si-containing particle 68 is doped with at least one kind of element M among Group 15 and Group 16 in the periodic table. That is to say, the Si-containing particle 68 contains at least one kind of element M among Group 15 and Group 16 in the periodic table. Specific examples of the element M include sulfur (S), phosphorus (P), nitrogen (N), arsenic (As), antimony (Sb), bismuth (Bi), selenium (Se), tellurium (Te), polonium (Po), and the like. In particular, S and P can be preferably used as the element M. Note that the Si-containing particle 68 may be doped with one kind of the aforementioned elements alone, or with two or more kinds thereof in combination.

The doping amount (that is, the content) of the element M in the Si-containing particle 68 is preferably 0.1 at% or more, more preferably 0.5 at% or more, and still more preferably 1 at% or more. Thus, the resistance reduction effect by doping with the element M can be exerted suitably and the input-output characteristic can be improved. On the other hand, if the doping amount is too large, the resistance reduction effect tends to be small. The doping amount of the element M is preferably 5 at% or less, more preferably 4 at% or less, and still more preferably 3 at% or less. The unit "at%" regarding the doping amount means the percentage of the atomic composition (atomic percent). The Si-containing particle being doped with the element M and the doping amount can be grasped using the inductively coupled plasma optical emission spectroscopy (ICP-OES) apparatus.

In the Si-containing particle 68, the element M may be contained only on a surface of the Si nanoparticle 68b, or may be uniformly diffused inside the Si nanoparticle 68b. It is preferable that the element M be uniformly diffused inside the Si nanoparticle 68b in the Si-containing particle 68. Thus, the resistance reduction effect can be improved more suitably. Although there is no particular limitation, it is preferable that the element M and Si and/or C do not form a compound in the Si-containing particle 68.

The Si-containing particle 68 in this embodiment can be manufactured suitably by the following method. Note that in the example to be described below, the Si-containing particle 68 is doped with sulfur (S) as the element M. However, the Si-containing particle 68 in this embodiment is not limited to the Si-containing particle 68 manufactured by the following method.

A preferable manufacturing method for the Si-containing particles 68 in this embodiment includes a step of mixing a SiO-C complex (porous carbon material-SiO), a sulfate compound, and a metal reducing agent (mixing step) and a step of heating the mixture (heating step).

In the mixing step, the SiO-C complex, the sulfate compound, and the metal reducing agent are mixed to prepare the mixture. A mixing method in the mixing step is not limited in particular, and for example, mixing may be performed using a mortar. The sulfate compound to be used in the mixing step is not limited in particular and examples thereof include magnesium sulfate, barium sulfate, sodium sulfate, and the like. The metal reducing agent is not limited in particular and may be Mg, Al, or the like.

Next, in the heating step, the prepared mixture is heated for a reducing reaction. In the heating step, sulfur (S) is reduced selectively and Si of the SiO-C complex is doped with S. The heating step is preferably performed in an inert atmosphere (for example, argon atmosphere, nitrogen atmosphere, or the like) at a heating temperature of 200°C to 500°C, for example. The heating time is not limited in particular and may be about 0.1 to 10 hours, for example. The manufacturing method for the Si-containing particles 68 in this embodiment may include a step of diffusing a reactant in a solvent (for example, water or the like) to remove the sulfate compound and the like, after the heating step (after the completion of the reducing reaction).

The weight ratio between the graphite particles 66 and the Si-containing particles 68 described above is not limited in particular, and is adjusted to satisfy preferably 9:1 to 4:6 and more preferably 9:1 to 5:5 and may be adjusted to satisfy 7:3 to 5:5. When the weight ratio between the graphite particles 66 and the Si-containing particles 68 is adjusted in the aforementioned range, the expansion and shrinkage of the entire negative electrode are suitably suppressed. Thus, both the cycle characteristic and the input-output characteristic of the secondary battery 100 can be achieved suitably.

The negative electrode active material layer 64 may include, as the Si-containing particles, Si-containing particles (second Si-containing particles) other than the Si-containing particles containing Si and C as far as the effect in the present disclosure is not impaired significantly. Examples of the second Si-containing particles include SiOₓ, porous particles in which Si nanoparticles not doped with another element are diffused, and the like.

The negative electrode active material layer 64 preferably includes a conductive material in addition to the negative electrode active material described above (graphite particles 66 and Si-containing particles 68). Examples of the conductive material include carbon nanotube such as single-walled carbon nanotube (SWCNT), double-walled carbon nanotube (DWCNT), and multi-walled carbon nanotube (MWCNT), carbon black such as acetylene black (AB), carbon fiber, and the like. In particular, carbon nanotube is preferable and single-walled carbon nanotube is more preferable. By the use of the carbon nanotube as the conductive material, the conductive path is maintained more suitably and the cycle characteristic of the secondary battery 100 can be improved more suitably.

The content of the negative electrode active material in the negative electrode active material layer (that is, the content of the negative electrode active material to the total weight of the negative electrode active material layer 64) is not limited in particular and for example, is preferably 80 wt% or more and more preferably 90 wt% or more and 99 wt% or less, and may be 95 wt% or more and 99 wt% or less. The content of the conductive material in the negative electrode active material layer is not limited in particular and is preferably 0.01 wt% or more and 1 wt% or less and more preferably 0.05 wt% or more and 0.5 wt% or less.

The negative electrode active material layer 64 may include a binder other than the negative electrode active material described above. As the binder, a conventionally known binder can be used. Examples of the binder include carboxymethyl cellulose (CMC), polyacrylic acid (PAA), styrene butadiene rubber (SBR), polyvinylidene fluoride (PVDF), and the like. In particular, CMC, PAA, and SBR can be preferably used. Although not particularly limited, it is more preferable to use CMC, PAA, and SBR in combination. The content of the binder in the negative electrode active material layer is not limited in particular and is preferably 1 wt% or more and 10 wt% or less and more preferably 1.5 wt% or more and 7 wt% or less.

The thickness of the negative electrode active material layer 64 on one surface is not limited in particular, and is for example 20 µm or more and preferably 50 µm or more. On the other hand, the thickness of the negative electrode active material layer 64 on one surface is for example 300 µm or less and preferably 200 µm or less.

The negative electrode active material layer 64 can be formed in such a way that the graphite particles 66 and the Si-containing particles 68, which are used as the negative electrode active material, and the material used as necessary (for example, conductive material and binder) are diffused in a suitable solvent (for example, water) to prepare a composition in a paste form (or slurry form), and the composition is applied on a surface of the negative electrode current collector 62 and dried. After that, pressing is performed as necessary, so that the thickness and density of the negative electrode active material layer 64 can be adjusted.

The structure of the negative electrode 60 and the structure of the secondary battery 100 in one embodiment are described above. The negative electrode 60 is suitably used for a nonaqueous electrolyte solution secondary battery. The negative electrode 60 as described above has the conductivity improved because Si is doped with the element M. In addition, in the negative electrode 60, the disconnection of the conductive path by the expansion and shrinkage due to the repeated charging and discharging can be suitably suppressed. Therefore, the secondary battery 100 in which both the input-output characteristic and the cycle characteristic are achieved suitably is realized. The secondary battery 100 as described above is usable in various applications, and can be suitably used as a motive power source for a motor (electrical power source for driving) that is mounted in a vehicle such as a passenger car or a truck, for example. The vehicle is not limited to a particular type, and may be, for example, a plug-in hybrid electric vehicle (PHEV), a hybrid electric vehicle (HEV), or a battery electric vehicle (BEV). The secondary battery 100 can also be suitably used in constructing a battery pack.

Although the wound electrode body is given as the electrode body 20 in the aforementioned secondary battery 100, the electrode body is not limited to this example. In another example, a laminated electrode body in which a plurality of positive electrodes in a substantially rectangular shape and a plurality of negative electrodes in a substantially rectangular shape are laminated on each other alternately through separators may be used.

Test examples of the present disclosure are hereinafter described but these test examples are not intended to limit the present disclosure to the test examples below.

### <Example 1>

First, Si-containing particles doped with sulfur (S) (Si-C complex, Si content: 50 wt%, doping amount: 3 at%) and graphite particles (D₅₀ particle diameter: 15 µm) were prepared as the negative electrode active material. Moreover, single-walled carbon nanotube (SWCNT) was prepared as the conductive material. As the binder, carboxymethyl cellulose (CMC), polyacrylic acid (PAA), and styrene butadiene rubber (SBR) were prepared. These were kneaded with water as the solvent so as to satisfy the weight ratio of graphite particles:Si-containing particles: SWCNT:CMC:PAA:SBR = 70:30:0.1:1:1:1.5, so that a negative electrode active material layer formation slurry was prepared.

Specifically, the mixing and the kneading for the negative electrode active material layer formation slurry were performed as below. First, the Si-containing particles, SWCNT in a paste form (solid content ratio 2%), and a dispersion medium were input, and diffused and mixed using a disperser at 3000 rpm; thus a paste was manufactured. Next, the graphite particles, CMC, and PAA were mixed in a dry procedure using a stirring granulator. Then, the manufactured paste, the mixed powder mixed in the dry procedure, and the dispersion medium were kneaded in a solid state. The solid content ratio at the solid kneading was 65%. To the mixture obtained by the solid kneading, SBR and the solvent (water) were further added and mixed. In this manner, the negative electrode active material layer formation slurry was prepared. This slurry was applied in a band shape on both surfaces of a copper foil (thickness 10 µm). Then, the slurry on the copper foil was dried and pressed to a predetermined thickness, and by processing the slurry into a predetermined size, a negative electrode sheet was manufactured.

Next, a lithium nickel cobalt manganese complex oxide (NCM) as the positive electrode active material, acetylene black (AB) as the conductive material, and polyvinylidene fluoride (PVDF) as the binder were prepared. These were mixed with N-methylpyrrolidone (NMP) as the solvent, so as to satisfy the weight ratio of NCM:AB:PVDF = 100:1:1; thus, a positive electrode active material layer formation slurry was prepared. This slurry was applied in a band shape on both surfaces of an aluminum foil (thickness 15 µm). Then, the slurry on the aluminum foil was dried and pressed to a predetermined thickness, and by processing the slurry into a predetermined size, a positive electrode sheet was manufactured.

The negative electrode sheet and the positive electrode sheet prepared as above were stacked through the separator, so that a laminate electrode body was manufactured. To each of the positive electrode sheet and the negative electrode sheet, a lead for current collection was attached and the laminate electrode body was inserted into an exterior body formed of an aluminum laminate sheet. A nonaqueous electrolyte solution was poured into the exterior body and an opening part of the exterior body was sealed; thus, a test battery according to Example 1 was manufactured. Note that a porous polyolefin sheet with a three-layer structure of PP/PE/PP was used as the separator. The nonaqueous electrolyte solution was prepared in such a manner that LiPF₆ as the electrolyte salt was dissolved at a concentration of 1 mol/L in a mixed solvent in which ethylene carbonate (EC), fluoroethylene carbonate (FEC), ethyl methyl carbonate (EMC), and dimethyl carbonate (DMC) were mixed so as to satisfy a volume ratio of EC:FEC:EMC:DMC = 15:5:40:40.

### <Example 2>

An evaluation battery according to Example 2 was manufactured in a manner similar to Example 1 except that Si-containing particles doped with phosphorus (P) (Si-C complex, Si content: 50 wt%, doping amount: 3 at%) were prepared as the Si-containing particles.

### <Example 3>

An evaluation battery according to Example 3 was manufactured in a manner similar to Example 1 except that the mixing ratio of the materials was changed so as to satisfy the weight ratio of graphite particles: Si-containing particles: SWCNT:CMC:PAA: SBR = 90:10:0.1:1:1:1.5.

### <Example 4>

An evaluation battery according to Example 4 was manufactured in a manner similar to Example 1 except that the mixing ratio of the materials was changed so as to satisfy the weight ratio of graphite particles: Si-containing particles: SWCNT:CMC:PAA: SBR = 50:50:0.1:1:1:1.5.

### <Example 5>

An evaluation battery according to Example 5 was manufactured in a manner similar to Example 1 except that Si-containing particles with a Si content of 25 wt% were prepared as the Si-containing particles.

### <Example 6>

An evaluation battery according to Example 6 was manufactured in a manner similar to Example 1 except that Si-containing particles with a Si content of 75 wt% were prepared as the Si-containing particles.

### <Example 7>

An evaluation battery according to Example 7 was manufactured in a manner similar to Example 1 except that undoped Si-containing particles were prepared as the Si-containing particles.

### <Example 8>

An evaluation battery according to Example 8 was manufactured in a manner similar to Example 1 except that undoped Si-containing particles were prepared as the Si-containing particles and the mixing ratio of the materials was changed so as to satisfy the weight ratio of graphite particles:Si-containing particles: SWCNT:CMC:PAA:SBR = 50:50:0.1:1:1:1.5.

### <Example 9>

An evaluation battery according to Example 9 was manufactured in a manner similar to Example 1 except that Si-containing particles with a S doping amount of 6 at% were prepared as the Si-containing particles.

### <Example 10>

An evaluation battery according to Example 10 was manufactured in a manner similar to Example 1 except that Si-containing particles with a P doping amount of 6 at% were prepared as the Si-containing particles.

### <Example 11>

An evaluation battery according to Example 11 was manufactured in a manner similar to Example 1 except that the mixing ratio of the materials was changed so as to satisfy the weight ratio of graphite particles: Si-containing particles: SWCNT:CMC:PAA: SBR = 30:70:0.1:1:1:1.5.

### <Evaluation on cycle capacity retention>

After CCCV charging (0.4 C until 4.2 V, followed by 0.1-C cut) was performed in an environment of 25°C, CC discharging (2.5-V cut at a rate of 0.4 C) was performed; this is regarded as one cycle. The capacity at this time was defined as the initial capacity. A cycle test was conducted by repeating 200 cycles of the charging and discharging. The discharging capacity in the first cycle (initial capacity) and the discharging capacity in the 200-th cycle were measured and the cycle capacity retention was obtained in accordance with the following Expression (1). The higher cycle capacity retention leads to a higher cycle characteristic of the secondary battery. The results are shown in Table 1.Cycle capacity retention (%)=((discharging capacity in the 200-th cycle)/(discharging capacity in the first cycle))×100

### <Evaluation on IV resistance>

Assuming that the initial capacity of each evaluation battery described above was an SOC of 100% in the environment of 25°C, each evaluation battery was charged until the SOC became 50% in a thermostatic chamber of 25°C. Next, in the thermostatic chamber of 25°C, charging was performed for 10 seconds with current values of 0.1 C, 0.2 C, 0.5 C, 1 C, and 2 C, and the battery voltages after the charging at the respective current values were measured. Each current value and each battery voltage were plotted and the I-V characteristic at the charging was obtained. From the obtained line inclination, the IV resistance (mΩ) at the discharging was obtained. The results are shown in Table 1. Note that as the IV resistance value is smaller, the input-output characteristic is higher.

**Table 1**

| | Si-containing particle | | | Weight ratio | Capacity retention (%) | IV resistance (mΩ) |
|---|---|---|---|---|---|---|
| | Si content (wt%) | Doping element | Doping amount (at%) | Graphite:Si-containing particles | | |
| Example 1 | 50 | S | 3 | 70:30 | 85 | 92 |
| Example 2 | 50 | P | 3 | 70:30 | 83 | 95 |
| Example 3 | 50 | S | 3 | 90:10 | 87 | 90 |
| Example 4 | 50 | S | 3 | 50:50 | 77 | 99 |
| Example 5 | 25 | S | 3 | 70:30 | 83 | 103 |
| Example 6 | 75 | S | 3 | 70:30 | 76 | 97 |
| Example 7 | - | - | - | 70:30 | 79 | 117 |
| Example 8 | - | - | - | 50:50 | 73 | 125 |
| Example 9 | 50 | S | 6 | 70:30 | 77 | 106 |
| Example 10 | 50 | P | 6 | 70:30 | 78 | 108 |
| Example 11 | 50 | S | 3 | 30:70 | 72 | 113 |

As shown in Table 1, the capacity retention is 76% or more and the IV resistance is 103 mΩ or less in the evaluation batteries according to Example 1 to Example 6. These results indicate that the secondary battery in which both the excellent cycle characteristic and input-output characteristic are achieved can be realized when the graphite particles and the Si-containing particles were included as the negative electrode active material, the Si-containing particles contain Si and C, Si of the Si-containing particle is doped with at least one kind of element among the elements belonging to Group 15 and Group 16 in the periodic table, and the weight ratio between the graphite particles and the Si-containing particles is 9:1 to 4:6.

As shown in Table 1, it is understood that the capacity retention is 76% or more, the IV resistance is 100 mΩ or less, and the input-output characteristic and the cycle characteristic of the secondary battery are achieved more suitably in Example 1 to Example 4 and Example 6 in which the Si content in the Si-containing particles is 30 wt% or more and 75 wt% or less.

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

As described above, the following items are given as specific aspects of the art disclosed herein.
Item 1: The secondary battery including the electrode body including the positive electrode and the negative electrode, in which the negative electrode includes the negative electrode current collector and the negative electrode active material layer disposed on the negative electrode current collector, the negative electrode active material layer includes the graphite particles and the Si-containing particles as the negative electrode active material, the Si-containing particle is the complex of Si and C, Si of the Si-containing particle is doped with the element M, the element M is at least one kind of element among the elements belonging to Group 15 and Group 16 in the periodic table, the doping amount of the element M in the Si-containing particle is 0.1 at% or more and 5 at% or less, and the weight ratio between the graphite particles and the Si-containing particles is 9:1 to 4:6.
Item 2: The secondary battery according to Item 1, in which the Si content in the Si-containing particles is 30 wt% or more and 75 wt% or less when the total weight of the Si-containing particles is 100 wt%.
Item 3: The secondary battery according to Item 1 or 2, in which the Si-containing particle includes the porous carbon material including the pore and the Si nanoparticle disposed in the pore of the porous carbon material.
Item 4: The secondary battery according to any one of Items 1 to 3, in which the graphite particles have an average particle diameter D₅₀ of 10 µm or more and 25 µm or less.
Item 5: The secondary battery according to any one of Items 1 to 4, in which the negative electrode active material layer further includes the conductive material, and the content of the conductive material is 0.01 wt% or more and 1 wt% or less when the total weight of the negative electrode active material layer is 100 wt%.

### [Reference Signs List]

20 Electrode body
30 Battery case
36 Safety valve
42 Positive electrode terminal
42a Positive electrode current collection plate
44 Negative electrode terminal
44a Negative electrode current collection plate
50 Positive electrode (positive electrode sheet)
52 Positive electrode current collector
52a Positive electrode current collector exposed part
54 Positive electrode active material layer
60 Negative electrode (negative electrode sheet)
62 Negative electrode current collector
62a Negative electrode current collector exposed part
64 Negative electrode active material layer
66 Graphite particle
68 Si-containing particle
68a Porous carbon material
68b Si nanoparticle
68p Pore
70 Separator
100 Secondary battery

## Claims

1. A secondary battery (100) comprising an electrode body (20) including a positive electrode (50) and a negative electrode (60), wherein
the negative electrode (60) includes a negative electrode current collector (62) and a negative electrode active material layer (64) disposed on the negative electrode current collector (62),
the negative electrode active material layer (64) includes graphite particles (66) and Si-containing particles (68) as a negative electrode active material,
the Si-containing particle (68) is a complex of Si and C,
Si of the Si-containing particle (68) is doped with an element M,
the element M is at least one kind of element among elements belonging to Group 15 and Group 16 in the periodic table,
a doping amount of the element M in the Si-containing particle (68) is 0.1 at% or more and 5 at% or less, and
a weight ratio between the graphite particles (66) and the Si-containing particles (68) is 9:1 to 4:6.

2. The secondary battery according to claim 1, wherein a Si content in the Si-containing particles (68) is 30 wt% or more and 75 wt% or less when a total weight of the Si-containing particles (68) is 100 wt%.

3. The secondary battery according to claim 1 or 2, wherein the Si-containing particle (68) includes a porous carbon material (68a) including a pore (68p) and a Si nanoparticle (68b) disposed in the pore (68p) of the porous carbon material (68a).

4. The secondary battery according to any one of claims 1 to 3, wherein the graphite particles (66) have an average particle diameter D₅₀ of 10 µm or more and 25 µm or less.

5. The secondary battery according to any one of claims 1 to 4, wherein
the negative electrode active material layer (64) further includes a conductive material, and
a content of the conductive material is 0.01 wt% or more and 1 wt% or less when a total weight of the negative electrode active material layer (64) is 100 wt%.
